Europäisches Patentamt

(19) European Patent Office

Office européen des brevets

(11) Numéro de publication: **0 069 611**
**B1**

(12) **FASCICULE DE BREVET EUROPEEN**

(45) Date de publication du fascicule du brevet:
**17.04.85**

(21) Numéro de dépôt: **82401051.6**

(22) Date de dépôt: **10.06.82**

(51) Int. Cl.⁴: **B 60 P 1/44,** A 61 G 5/00

(54) **Dispositif élévateur d'une plate-forme, monté sur un véhicule automobile.**

(30) Priorité: **17.06.81 FR 8111945**

(43) Date de publication de la demande:
**12.01.83 Bulletin 83/2**

(45) Mention de la délivrance du brevet:
**17.04.85 Bulletin 85/16**

(84) Etats contractants désignés:
**AT BE CH DE GB IT LI LU NL SE**

(56) Documents cités:
**FR - A - 2 052 328**
**US - A - 3 172 551**
**US - A - 3 984 014**
**US - A - 4 140 230**

(73) Titulaire: **Société à Responsabilité Limitée dite: MANUTIS, Zone Industrielle de Bellevue,
F-35220 Chateaubourg (FR)**

(72) Inventeur: **Tortellier, Christian, 57, rue d'Herblay,
F-95150 Taverny (FR)**

(74) Mandataire: **Moulines, Pierre et al, Cabinet BEAU de LOMENIE 55, rue d'Amsterdam, F-75008 Paris (FR)**

BUNDESDRUCKEREI BERLIN

## Description

La présente invention a pour objet un dispositif élévateur d'une plate-forme monté sur un véhicule automobile.

Le déplacement de personnes handicapées, notamment celles qui ne peuvent se déplacer qu'au moyen d'une chaise roulante, présente toujours des difficultés lorsqu'il s'agit de monter et de descendre d'un véhicule dont le plancher présente une dénicellation par rapport au sol.

En vue de remédier à cet inconvénient, il est connu d'utiliser des plates-formes élévatrices sur lesquelles la chaise roulante et la personne sont disposées pour être transférées d'un niveau à un autre.

Le document US-A-4 140 230 décrit un tel dispositif de plate-forme élévatrice qui est compliqué et encombrant pour son montage sur un véhicule. Par ailleurs, la plate-forme n'est pas repliable automatiquement.

On connaît également le document FR-A-2 052 328 qui correspond au préambule de la revendication 1 et qui concerne un pont de chargement pour véhicule utilitaire comportant une plate-forme permettant de soulever une charge.

Ce dispositif comprend deux bielles articulées d'un côté sur un support solidaire du véhicule et de l'autre côté sur un bras porteur, l'extrémité inférieure du bras porteur comportant un axe d'articulation destiné à être relié à une plate-forme.

Toutefois, ce dispositif comporte un vérin relié d'un côté au support et de l'autre côté à un levier solidaire de l'axe de l'une des bielles.

Ce dispositif nécessite une fixation du vérin sur le support ce qui nécessite un renforcement du support et il ne permet pas le relevage puis le basculement automatique de la plate-forme.

Or cet automatisme est particulièrement avantageux lorsqu'il s'agit d'une personne handicapée.

La présente invention concerne un dispositif élévateur permettant de remédier aux inconvénients des dispositifs connus.

Conformément à la présente invention, le support est constitué par une chape solidaire du plancher du véhicule et entre les flasques de laquelle sont articulées les bielles, l'extrémité inférieure du bras porteur comporte un axe d'articulation d'un levier sur lequel est fixé un axe s'étendant latéralement et solidaire de la plate-forme, ledit levier étant articulé dans sa partie médiane, entre ledit axe d'articulation et l'axe s'étendant latéralement, autour d'un axe disposé à l'une des extrémités d'un vérin dont l'autre extrémité est articulée sur la bielle inférieure en arrière de son axe d'articulation sur le bras porteur, l'axe d'articulation du levier sur la partie inférieure du bras porteur étant solidaire en rotation d'un ergot susceptible de venir en butée contre un bossage fixé sur l'une des faces du bras porteur et entre les flasques de la chape, est fixé sur le plancher du véhicule un organe de butée contre lequel est susceptible de venir en appui l'une des extrémités de l'une des bielles en position d'escamotage.

Le dispositif suivant l'invention est de réalisation très simple et peu coûteuse afin d'être développé largement en fonction de la demande. Le dispositif n'occupe dans le véhicule qu'un emplacement très limité lorsqu'il est en position d'escamotage pour le transport routier.

Par ailleurs, le déploiement et le repliage sont entièrement réalisés mécaniquement au moyen d'un seul vérin hydraulique et sans intervention manuelle de la personne handicapée.

D'autres caractéristiques et avantages de l'invention seront mieux compris à la lecture de la description qui va suivre d'un mode de réalisation et en se référant aux dessins annexés, sur lesquels:

— la figure 1 est une vue en perspective du dispositif élévateur d'une palte-forme suivant l'invention;

— la figure 2 est une vue synoptique du dispositif élévateur;

— la figure 3 est une vue en élévation latérale du dispositif élévateur lorsque la plate-forme repose sur le sol;

— la figure 4 est une vue en élévation latérale du dispositif élévateur lorsque la plate-forme est en position haute et horizontale;

— la figure 5 est une vue en élévation latérale du dispositif élévateur en position escamotée.

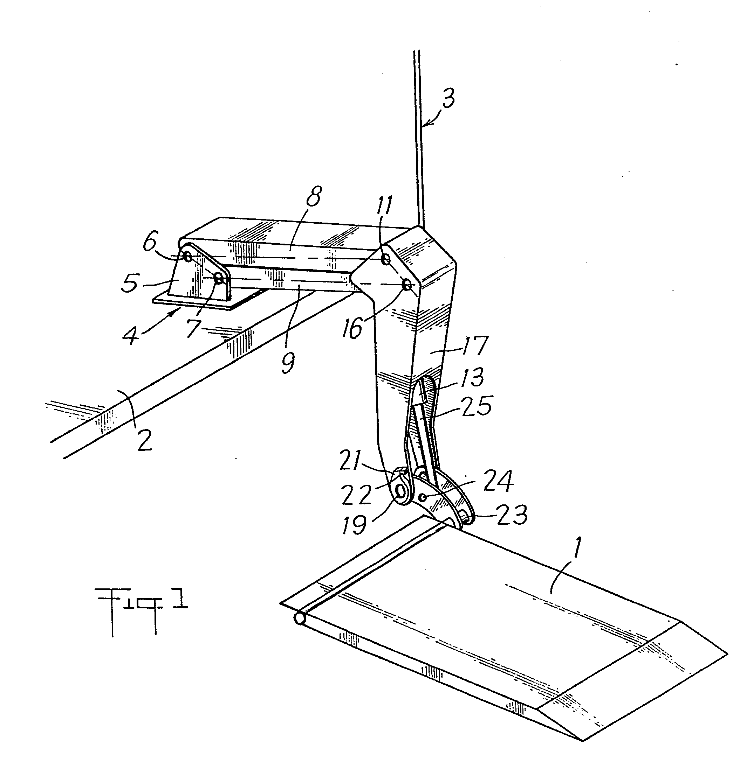

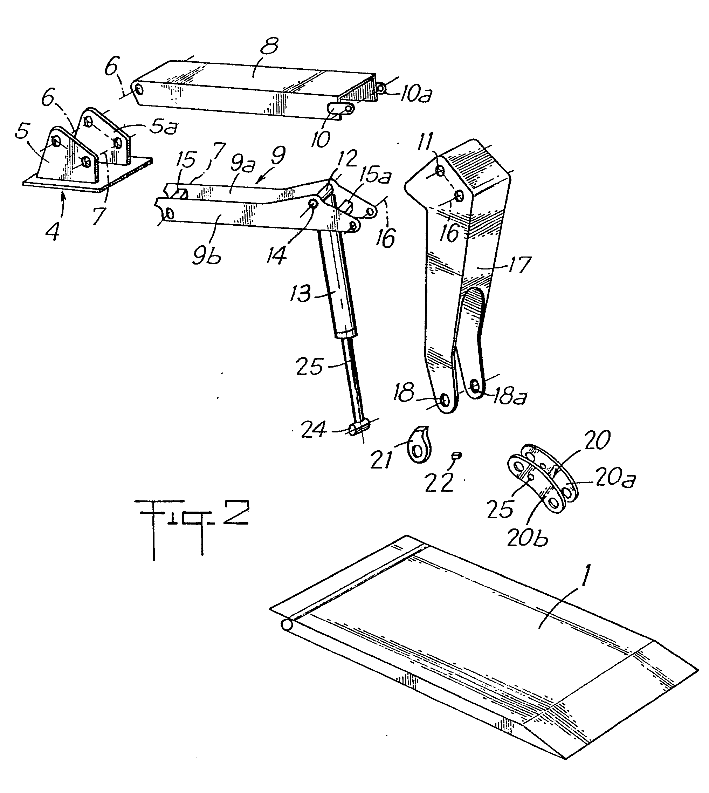

Aux figures 1 à 3, on a représenté un mode de réalisation d'un dispositif élévateur d'une plate-forme 1 et qui est monté sur le plancher 2 d'un véhicule automobile 3.

Le dispositif comprend une chape 4 fixée sur le plancher 2 du véhicule et présentant deux flasques 5, 5a entre lesquels sont articulées par l'une de leurs extrémités autour d'axe 6 et 7 deux bielles supérieure 8 et inférieure 9. La bielle supérieure 8 qui présente en section la forme d'un U comporte à son extrémité opposée à l'axe 6 des oreilles 10, 10a dans lesquelles est engagé un axe 11 par lequel la bielle 8 est articulée sur la partie supérieure d'un bras porteur 17. La bielle inférieure 9 est constituée de deux flancs 9a, 9b reliés par des traverses 15, 15a.

A l'extrémité de la bielle inférieure 9 opposée à l'axe 7 est monté un axe 16 par lequel ladite bielle est articulée sur le bras porteur 17. A sa partie inférieure, le bras de levage 17 présente des trous 18, 18a dans lesquels est articulé au moyen d'un axe 19 un levier 20 constitué de deux flancs 20a, 20b, ledit axe 19 étant solidaire d'un ergot 21 susceptible de venir en butée contre un bossage 22 fixé sur l'une des faces du bras 17.

A son extrémité opposée à l'axe 19, le levier 20 est solidaire d'un arbre 23 s'étandant latéralement et sur lequel est fixée la plate-forme 1 qui s'étend horizontalement.

Dans sa partie médiane, le levier 20 présente des trous 25 dans lesquels est articulé un tourillon 24 prévu à l'extrémité de la tige coulissante 25 d'un vérin 13 dont le corps est solidaire d'un tourillon 12 engagé dans des trous 14 prévus dans les flancs 9a, 9b de la bielle inférieure 9.

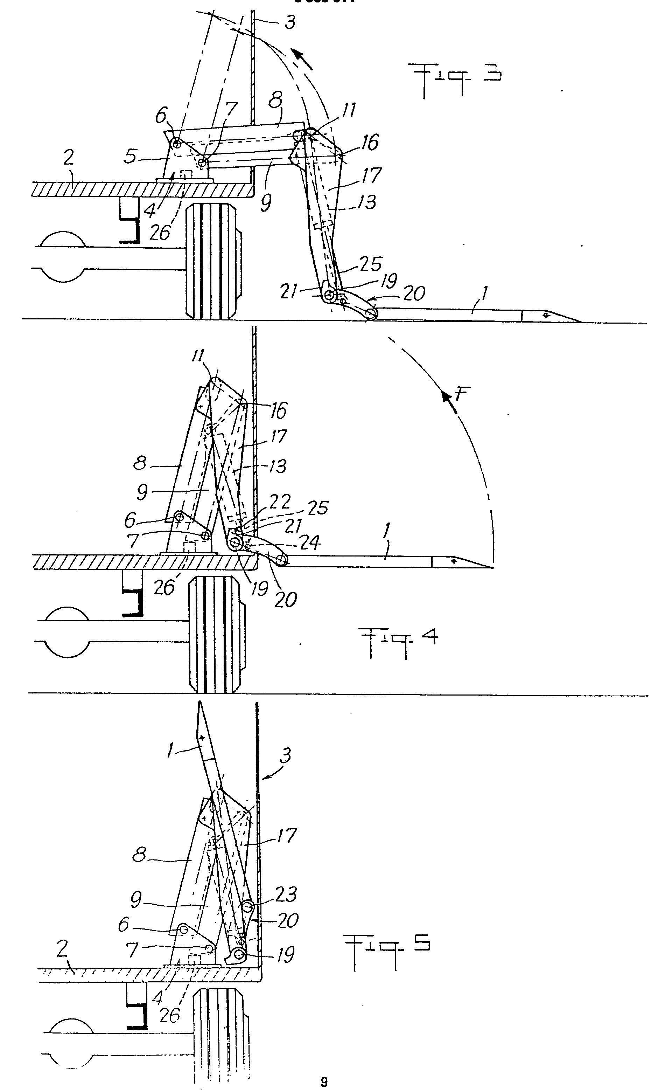

Entre les flasques 5, 5a de la chape 4 est disposé un bossage 26 contre lequel est susceptible de venir en butée l'une des extrémités de la bielle inférieure 9 lorsqu'elle est en position repliée (figures 4 et 5).

Le dispositif élévateur de plate-forme suivant l'invention fonctionne de la manière suivante.

La plate-forme 1 reposant sur le sol, ainsi qu'il est représenté à la figure 3, on procède à son chargement. Pour amener la charge au niveau du plancher 2 du véhicule, on alimente le vérin 13 de manière à provoquer sa rétraction sur le bras porteur 17 et la déformation du parallélogramme formé par les bielles 8 et 9, ainsi qu'il est représenté à la figure 4.

Les bielles 8 et 9 sont bloquées dans cette position du fait que la bielle 9 est en butée contre le bossage 26.

Au cours du déplacement de l'ensemble, la plate-forme 1 reste horizontale du fait que l'ergot 21 est en butée contre le bossage 22.

Lorsque la charge est transférée de la plate-forme 1 sur le plancher 2 du véhicule, on peut procéder à l'escamotage de la plate-forme 1. En effet, les bielles 8, 9 et le bras 17 étant bloqués à l'intérieur du véhicule, si on poursuit l'opération de rétraction du vérin, celui-ci agit sur le levier 20 qui pivote ainsi que la plate-forme 1 autour de l'axe 19 suivant la flèche F pour amener la plate-forme dans la position d'escamotage représentée à la figure 5.

Pour procéder au déchargement, on agit sur le vérin 13 afin de provoquer l'extension de la tige 25 et le déploiement dans une première phase de la plate-forme 1 qui vient occuper une position horizontale haute, comme représenté à la figure 4.

Si on poursuit l'extension de la tige 25 du vérin, l'ergot 21 étant en butée contre le bossage 22, il se produit une déformation de l'ensemble formé par les bielles 8 et 9 et le bras 17 qui amène la plate-forme 1 au niveau du sol (figure 3).

## Revendication

Dispositif élévateur d'une plate forme monté sur un véhicule automobile, notamment pour le déplacement d'une personne handicapée, comprenant deux bielles (8, 9) formant un parallélogramme, qui sont articulées par l'une de leurs extrémités sur un support solidaire du véhicule et par leur autre extrémité sur la partie supérieure d'un bras porteur (17), caractérisé en ce que ledit support est constitué par une chape (4) solidaire du plancher du véhicule et entre les flasques de laquelle sont articulées les bielles (8, 9), en ce que l'extrémité inférieure du bras porteur (17) comporte un axe d'articulation (19) d'un levier (20) sur lequel est fixé un axe (23) s'étendant latéralement et solidaire de la plate-forme (1), ledit levier (20) étant articulé dans sa partie médiane, entre l'axe d'articulation (19) et l'axe s'étendant latéralement (23), autour d'un axe (24) disposé à l'une des extrémités d'un vérin (13) dont l'autre extrémité est articulée sur la bielle inférieure (9) en arrière de son axe d'articulation (16) sur le bras porteur (17), l'axe d'articulation du levier (20) sur la partie inférieure du bras porteur (17), étant solidaire en rotation d'un ergot (21) susceptible de venir en butée contre un bossage (22) fixé sur l'une des faces du bras porteur (17), et en ce que entre les flasques de la chape (4) est fixé sur le plancher (2) du véhicule un organe de butée (26) contre lequel est susceptible de venir en appui l'une des extrémités de l'une des bielles (9) en position d'escamotage.

## Patentanspruch

Hebevorrichtung für eine an einem Kraftfahrzeug befestigte Plattform, insbesondere für die Bewegung einer behinderten Person,

— mit zwei ein Parallelogramm bildenden Lenkern, die mit einem ihrer Enden an einem mit dem Fahrzeug fest verbundenen Träger und mit dem anderen Ende am Oberteil eines Tragarms (17) angelenkt sind,

dadurch gekennzeichnet,

— daß der Träger aus einem mit der Aufbauplatte des Fahrzeugs verbundenen Gabelbügel (4) besteht, zwischen dessen Flanschen die Lenker (8, 9) angelenkt sind,

— daß das untere Ende des Tragarms (17) eine Anlenkachse (19) eines Hebels (20) aufweist, an dem eine Achse (23) befestigt ist, die sich seitlich erstreckt und mit der Plattform (1) fest verbunden ist, wobei der Hebel (20) an seinem Mittelteil zwischen der Anlenkachse (19) und der sich seitlich erstreckenden Achse (23) an einer Achse (24) angelenkt ist, die sich an einem der Enden eines Stellzylinders (13) befindet, dessen anderes Ende am unteren Lenker (9) hinter dessen Anlenkachse (16) am Tragarm (17) angelenkt ist, wobei die Anlenkachse des Hebels (20) am Unterteil des Tragarms (17) mit einem Ansatz (21) drehfest verbunden ist, der in Anlage an einen Vorsprung (22) kommen kann, der an der einen der Seiten des Tragarms (17) befestigt ist, und

— daß zwischen den Flanschen des Gabelbügels (4) an der Aufbauplatte (2) des Fahrzeugs ein Anlageorgan (26) befestigt ist, an dem eines der Enden eines (9) der Lenker in Einziehstellung in Anlage kommen kann.

## Claim

Lifting device of a platform mounted on a motor vehicle, particularly for moving a handicapped person, comprising two connecting pieces (8, 9) forming a parallelogram, which are hinged by one of their ends on a support member integral with the vehicle and by their other end on the upper part of a bearing arm (17), characterized in that said support member is constituted by a yoke member (4) integral with the floor of the vehicle and between the side plates of which are hinged the connecting pieces (8, 9), in that the lower end of the bearing arm (17) comprises a pivot pin (19) of a lever (20) on which is fixed a spindle (23) extending laterally and integral with the plat-form (1), said lever (20) being mounted for pivoting in its median part between the pivot pin (19) and the laterally extending spindle (23) about the axis (24) placed at one end of the jack (13), whose other end is hinged on the lower connecting piece (9) behind its pivot pin (16) on the bearing arm (17), the pivoting axis of the lever (20) on the lower part of the bearing arm (17) being integral in rotation with a lug piece (21) adapted to abut against a boss (22) fixed on one the bearing arm (17) faces, and in that between the side plates of the yoke (4) an abuting member (26) is fixed on said floor (2) of the vehicle, against which member one of the ends of one of the connecting pieces (9) comes to rest in retracted position.

Fig.1

Fig. 2

0 069 611

Fig. 3

Fig. 4

Fig. 5

9